(19) Europäisches Patentamt
European Patent Office
Office européen des brevets

(11) Publication number: 0 301 199 B1

(12) **EUROPEAN PATENT SPECIFICATION**

(45) Date of publication of patent specification: **03.02.93**

(51) Int. Cl.5: **G10L 5/06**

(21) Application number: **88108680.5**

(22) Date of filing: **31.05.88**

(54) **Normalization of speech by adaptive labelling.**

(30) Priority: **09.07.87 US 71687**

(43) Date of publication of application:
**01.02.89 Bulletin 89/05**

(45) Publication of the grant of the patent:
**03.02.93 Bulletin 93/05**

(84) Designated Contracting States:
**DE FR GB**

(56) References cited:

**INTERNATIONAL CONFERENCE ON ACOUSTICS, SPEECH, AND SIGNAL PROCESSING, Tokyo, 7th-11th April 1986, vol. 4 of 4, pages 2643-2646, IEEE, New York, US; K. SHIKANO et al.: "Speaker adaptation through vector quantization"**

**IBM TECHNICAL DISCLOSURE BULLETIN, vol. 21, no. 8, January 1979, pages 3413-3414, New York, US; C.C. TAPPERT et al.: "Fast training method for speech recognition systems"**

(73) Proprietor: **International Business Machines Corporation**
**Old Orchard Road**
**Armonk, N.Y. 10504(US)**

(72) Inventor: **Nadas, Arthur Joseph**
**179 Bull Road**
**Rock Tavern New York 12575(US)**
Inventor: **Nahamoo, David**
**12 Elmwood Road**
**White Plains New York 10605(US)**

(74) Representative: **Jost, Ottokarl, Dipl.-Ing.**
**Schönaicher Strasse 220**
**W-7030 Böblingen(DE)**

EP 0 301 199 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

In general, the present invention relates to speech processing (such as speech recognition). In particular, the invention relates to apparatus and method for characterizing speech as a string of spectral vectors and/or labels representing predefined prototype vectors of speech.

In speech processing, speech is generally represented by an n-dimensional space in which each dimension corresponds to some prescribed acoustic feature. For example, each component may represent an amplitude of energy in a respective frequency band. For a given time interval of speech, each component will have a respective amplitude. Taken together, the n amplitudes for the given time interval represent an n-component vector in the n-dimensional space.

Based on a known sample text uttered during a training period, the n-dimensional space is divided into a fixed number of regions by some clustering algorithm. Each region represents sounds of a common prescribed type; sounds having component values which are within regional bounds. For each region, a prototype vector is defined to represent the region.

The prototype vectors are defined and stored for later processing. When an unknown speech input is uttered, for each time interval, a value is measured or computed for each of the n components, where each component is referred to as a feature. The values of all of the features are consolidated to form an n-component feature vector for a time interval.

In some instances, the feature vectors are used in subsequent processing.

In other instances, each feature vector is associated with one of the predefined prototype vector and the associated prototype vectors are used in subsequent processing.

In associating prototype vectors with feature vectors, the feature vector for each time interval is typically compared to each prototype vector. Based on a predefined closeness measure, the distance between the feature vector and each prototype vector is determined and the closest prototype vector is selected.

A speech type of event, such as a word or a phoneme, is characterized by a sequence of feature vectors in the time period over which the speech event was produced. Some prior art accounts for temporal variations in the generation of feature vector sequences. These variations may result from differences in speech between speakers or for a single speaker speaking at different times. The temporal variations are addressed by a process referred to as time warping in which time periods are stretched or shrunk so that the time period of a feature vector sequence conforms to the time period of a reference prototype vector sequence, called a template. Oftentimes, the resultant feature vector sequence is styled as a "time normalized" feature vector sequence.

Because feature vectors or prototype vectors (or representations thereof) associated with the feature vectors or both are used in subsequent speech processing, the proper characterization of the feature vectors and proper selection of the closest prototype vector for each feature vector is critical.

The relationship between a feature vector and the prototype vectors has normally, in the past, been static; there has been a fixed set of prototype vectors and a feature vector based on the values of set features.

However, due to ambient noise, signal drift, changes in the speech production of the talker, differences between talkers or a combination of these, signal traits may vary over time. That is, the acoustic traits of the training data from which the prototype vectors are derived may differ from the acoustic traits of the data from which the test or new feature vectors are derived. The fit of the prototype vectors to the new data traits is normally not as good as to the original training data. This affects the relationship between the prototype vectors and later-generated feature vectors, which results in a degradation of performance in the speech processor.

Therefore, efforts have been made for speech normalization by adaptive vector mapping which are described in "Speaker Adaption Through Vector Quantization", by K. Shikano et al.: ICASSP, Tokyo, April 1986, Vol. 4 of 4, pages 2643 - 2646. The basic idea in this paper is to find the correspondence between two vector quantized codebooks from different speakers. Once the correspondence between the codebooks is reasonably determined, the sophisticated normalization of spectra is possible. This correspondence is represented in the form of a substitution table or a mapped codebook. A substitution table is determined by finding a one-to-one correspondence between two codebooks. Once the substitution table is obtained, the used algorithm can be easily modified by inserting a substitution stage of vector numbers.

A mapped codebook is obtained by a procedure that the maps vectors of input reference onto the vector space of a reference input speaker. The mapped codebook is represented as a linear combination of vectors of a reference input speaker. The used algorithm can also be easily applied by changing the distance matrix.

The approach of the present invention is to provide apparatus and method for adapting feature vectors

in order to account for noise and other ambient conditions as well as intra and inter speaker variations which cause the speech data traits from which feature vectors are derived to vary from the training data traits from which the prototypes are derived.

In particular, each feature vector $\bar{x}_i$ generated at a time interval i is transformed into a normalized vector $\bar{y}_i$ according to the expression:

$$\bar{y}_i = A_i(x)$$

where x is a set of one or more feature vectors at or before time interval i and where $A_i$ is an operator function which includes a number of parameters. According to the invention, the values of the parameters in the operator function are up-dated so that the vector $\bar{y}$ (at a time interval i) is more informative than the feature vector $\bar{x}$ (at a time interval i) with respect to the representation of the acoustic space characterized by an existing set of prototypes. That is, the transformed vectors $\bar{y}_i$ more closely correlate to the training data upon which the prototype vectors are based than do the feature vectors $\bar{x}_i$.

Generally, the invention includes transforming a feature vector $\bar{x}_i$ to a normalized vector $\bar{y}_i$ according to an operator function; determining the closest prototype vector for $\bar{y}_i$; for altering the operator function in a manner which would move $\bar{y}_i$ closer to the closest prototype thereto; and applying the altered operator function to the next feature vector in the transforming thereof to a normalized vector.

Stated more specifically, the present invention provides that parameters of the operator function be first initialized. The operator function $A_0$ at the first time interval $i=0$ is defined with the initialized parameters and is applied to a first vector $\bar{x}_0$ to produce a transformed vector $\bar{y}_0$. For $\bar{y}_0$, the closest prototype vector is selected based on an objective closeness function D. The objective function D is in terms of the parameters used in the operator function. Optimizing the function D with respect to the various parameters (e.g., determining, with a "hill-climbing" approach, a value for each parameter at which the closeness function is maximum), up-dated values for the parameters are determined and incorporated into the operator function for the next time interval $i=1$. The adapted operator function $A_1$ is applied to the next feature vector $\bar{x}_1$ to produce a normalized vector $\bar{y}_1$. For the normalized vector $\bar{y}_1$, the closest prototype vector is selected. The objective function D is again optimized with respect to the various parameters to determine up-dated values for the parameters. The operator function $A_2$ is then defined in terms of the up-dated parameter values.

With each successive feature vector, the operator function parameters are up-dated from the previous values thereof.

In accordance with the invention, the following improved outputs are generated. One output corresponds to "normalized" vectors $\bar{y}_i$. Another output corresponds to respective prototype vectors (or label representations thereof) associated with the normalized vectors.

When a speech processor receives continuously normalized vectors $\bar{y}_i$ as input rather than the raw feature vectors $\bar{x}_i$, the degradation of performance is reduced. Similarly, for those speech processors which successive prototype vectors from a fixed set of prototype vectors and/or label representations as input, performance is improved when the input prototype vectors are selected based on the transformed vectors rather than raw feature vectors.

The subject matter regarded as the invention is specified in the appended claims. The invention may best be understood by making reference to the following description and the accompanying figures.

BRIEF DESCRIPTION OF THE DRAWINGS

- Fig. 1 is a general block diagram of a speech processing system.
- Fig. 2 is a general block diagram of a speech processing system with designated back ends.
- Fig. 3 is a drawing illustrating acoustic space partitioned into regions, where each region has a representative prototype included therein. Feature vectors are also shown, each being associated with a "closest" prototype vector.
- Fig. 4 is a drawing illustrating acoustic space partitioned into regions, where each region has a representative prototype included therein. Feature vectors are shown transformed according to the present invention into normalized vectors which are each associated with a "closest" prototype vector.
- Fig. 5 is a block diagram showing an acoustic processor which embodies the adaptive labeller of the present invention.
- Fig. 6 is a block diagram showing a specific embodiment of an adaptive labeller according to the present invention.
- Fig. 7 is a diagram of a distance calculator element of Fig. 6.

Fig. 8 is a diagram of a minimum selector element of Fig. 6.

Fig. 9 is a diagram of a derivative calculator element of Fig. 6.

Fig. 10 is a flowchart generally illustrating the steps of adaptive labelling according to the present invention.

Fig. 11 is a specific flowchart illustrating the steps of adaptive labelling according to the present invention.

In Fig. 1, the general diagram for a speech processing system 100 is shown. An acoustic processor 102 receives as input an acoustic speech waveform and converts it into data which a back-end 104 processes for a prescribed purpose. Such purposes are suggested in Fig. 2.

In Fig. 2, the acoustic processor 102 is shown generating output to three different elements. The first element is a speech coder 110. The speech coder 110 alters the form of the data exiting the acoustic processor 102 to provide a coded representation of speech data. The coded data can be transferred more rapidly and can be contained in less storage than the original uncoded data.

The second element receiving input from the acoustic processor 102 is a speech synthesizer 112. In some environments, it is desired to enhance a spoken input by reducing noise which accompanies the speech signal. In such environments, a speech waveform is passed through an acoustic processor 102 and the data therefrom enters a speech synthesizer 112 which provides a speech output with less noise.

The third element corresponds to a speech recognizer 114 which converts the output of the acoustic processor 102 into text format. That is, the output from the acoustic processor 102 is formed into a sequence of words which may be displayed on a screen, processed by a text editor, used in providing commands to machinery, stored for later use in a textual context, or used in some other text-related manner.

Various examples of the three elements are found in the prior technology. In that the present invention is mainly involved with generating input to these various elements, further details are not provided. It is noted, however, that a preferred use of the invention is in conjunction with a "Speech Recognition System" invented by L. Bahl, S.V. DeGennaro, and R.L. Mercer for which a patent application was filed on March 27, 1986 (S.N. 06/845155). The earlier filed application is assigned to the IBM Corporation, the assignee of the present application, and is incorporated herein by reference to the extent necessary to provide background disclosure of a speech recognizer which may be employed with the present invention.

At this point, it is noted that the present invention may be used with any speech processing element which receives as input either feature vectors or prototype vectors (or labels representative thereof) associated with feature vectors. By way of explanation, reference is made to Fig. 3. In Fig. 3, speech is represented by an acoustic space. The acoustic space has n dimensions and is partitioned into a plurality of regions (or clusters) by any of various known techniques referred to as "clustering". In the present embodiment, acoustic space is divided into 200 non-overlapping clusters which are preferably Voronoi regions. Fig. 3 is a two-dimensional representation of part of the acoustic space.

For each region in the acoustic space, there is defined a respective, representative n-component prototype vector. In Fig. 3, four of the 200 prototype vectors $\overline{P}_3$, $\overline{P}_{11}$, $\overline{P}_{14}$, and $\overline{P}_{56}$ are illustrated. Each prototype represents a region which, in turn, may be viewed as a "sound type." Each region, it is noted, contains vector points for which the n components --when taken together-- are somewhat similar.

In a first embodiment, the n components correspond to energy amplitudes in n distinct frequency hands. The points in a region represent sounds in which the n frequency band amplitudes are collectively within regional bounds.

Alternatively, in an earlier filed European patent application 85 111 905.7 assigned to the IBM Corporation, the n components are based on a model of the human ear. That is, a neural firing rate in the ear is determined for each of n frequency bands; the n neural firing rates serving as the n components which define the acoustic space, the prototype vectors, and feature vectors used in speech recognition. The sound types in this case are defined based on the n neural firing rates, the points in a given region having somewhat similar neural firing rates in the n frequency bands.

Referring still to Fig. 3, five feature vectors at respective successive time intervals $i=1$, $i=2$, $i=3$, $i=4$, and $i=5$ are shown as $\overline{x}_1$, $\overline{x}_2$, $\overline{x}_3$, $\overline{x}_4$, and $\overline{x}_5$, respectively. According to standard prior art methodology, each of the five identified feature vectors would be assigned to the Voronoi region corresponding to the prototype vector $\overline{P}_{11}$.

The two selectable outputs for a prior art acoustic processor would be (1) the feature vectors $\overline{x}_1$, $\overline{x}_2$, $\overline{x}_3$, $\overline{x}_4$, and $\overline{x}_5$ themselves and (2) the prototypes associated therewith, namely $\overline{P}_{11}$, $\overline{P}_{11}$, $\overline{P}_{11}$, $\overline{P}_{11}$, $\overline{P}_{11}$, respectively. It is noted that each feature vector $\overline{x}_1$, $\overline{x}_2$, $\overline{x}_3$, $\overline{x}_4$, and $\overline{x}_5$ is displaced from the prototype vector by some considerable deviation distance; however the prior technology ignores the deviation distance.

In Fig. 4, the effect underlying the present invention is illustrated. With each feature vector, at least part

of the deviation distance is considered in generating more informative vector outputs for subsequent speech coding, speech synthesis, or speech recognition processing. Looking first at feature vector $\bar{x}_1$, a transformation is formed based on an operator function $A_1$ to produce a transformed normalized vector $\bar{y}_1$. The operator function is defined in terms of parameters which, at time interval i = 1, are initialized so that $\bar{y}_1 = \bar{x}_1$ in the Fig. 4 embodiment; $\bar{x}_1$ and $\bar{y}_1$ are directed to the same point.

It is observed that initialization may be set to occur at time interval i = 0 or i = 1 or at other time intervals depending on convention. In this regard, in Fig. 4 initialization occurs at time interval i = 1; in other parts of the description herein initialization occurs at time interval i = 0.

Based on a predefined objective function, an error vector $\bar{E}_1$ is determined. In Fig. 4, $\bar{E}_1$ is the difference vector of projected movement of $\bar{y}_1$ in the direction of the closest prototype thereto. (The meaning of "closeness" is discussed hereinbelow.) $\bar{E}_1$ may be viewed as a determined error vector for the normalized vector $\bar{y}_1$ at time interval i = 1.

Turning next to feature vector $\bar{x}_2$, it is noted that $\bar{y}_2$ is determined by simply vectorally adding the $\bar{E}_1$ error vector to feature vector $\bar{x}_2$. A projected distance vector of movement of $\bar{y}_2$ toward the prototype associated therewith (in this case prototype $\bar{P}_{11}$) is then computed according to a predefined objective function. The result of adding (1) the computed projected distance vector from $\bar{y}_2$ onto (2) the error vector $\bar{E}_1$ (extending from the feature vector $\bar{x}_2$) is an error vector $\bar{E}_2$ for time interval i = 2. The error vector $\bar{E}_2$ is shown in Fig. 4 by a dashed line arrow.

Turning next to feature vector $\bar{x}_3$, the accumulated error vector $\bar{E}_2$ is shown being added to vector $\bar{x}_3$ in order to derive the normalized vector $\bar{y}_3$. Significantly, it is observed that $\bar{y}_3$ is in the region represented by the prototype $\bar{P}_3$. A projected move of $\bar{y}_3$ toward the prototype associated therewith is computed based on an objective function. The result of adding (1) the computed projected distance vector from $\bar{y}_3$ onto (2) the error vector $\bar{E}_2$ (extending from the feature vector $\bar{x}_3$) is a next error vector $\bar{E}_3$ for time interval i = 3. The error vector $\bar{E}_3$ in effect builds from the projected errors of previous feature vectors.

Referring still to Fig. 4, it is observed that error vector $\bar{E}_3$ is added to feature vector $\bar{x}_4$ to provide a transformed normalized vector $\bar{y}_4$, which is projected a distance toward the prototype associated therewith. $\bar{y}_4$ is in the region corresponding to prototype $\bar{P}_3$; the projected move is thus toward prototype vector $\bar{P}_3$ by a distance computed according to an objective function. Error vector $\bar{E}_4$ is generated and is applied to feature vector $\bar{x}_5$ to yield $\bar{y}_5$. $\bar{y}_5$ is in the region corresponding to prototype vector $\bar{P}_{56}$; the projected move of $\bar{y}_5$ is thus toward that prototype vector.

In Fig. 4, each feature vector $\bar{x}_i$ is transformed into a normalized vector $\bar{y}_i$. It is the normalized vectors which serve as one output of the acoustic processor 102, namely $\bar{y}_1\bar{y}_2\bar{y}_3\bar{y}_4\bar{y}_5$. Each normalized vector, in turn, has an associated prototype vector. A second output of the acoustic processor 102 is the associated prototype vector for each normalized vector. In the Fig. 4 example, this second type of output would include the prototype vector string $\bar{P}_{11}\bar{P}_{11}\bar{P}_3\bar{P}_3\bar{P}_{56}$. Alternatively, assigning each prototype a label (or "feneme") which identifies each prototype vector by a respective number, the second output may be represented by a string such as 11,11,3,3,56 rather than the vectors themselves.

In Fig. 5, an acoustic processor 200 which embodies the present invention is illustrated. A speech input enters a microphone 202, such as a Crown PZM microphone. The output from the microphone 202 passes through a pre-amplifier 204, such as a Studio Consultants Inc. pre-amplifier, enroute to a filter 206 which operates in the 200 Hz to 8 KHz range. (Precision Filters markets a filter and amplifier which may be used for elements 206 and 208.) The filtered output is amplified in amplifier 208 before being digitized in an A/D convertor 210. The convertor 210 is a 12-bit, 100 kHz analog-to-digital convertor. The digitized output passes through a Fast Fourier Transform FFT/Filter Bank Stage 212 (which is preferably an IBM 3081 Processor). The FFT/Filter Bank Stage 212 separates the digitized output of the A/D convertor 210 according to frequency bands. That is, for a given time interval, a value is measured or computed for each frequency band based on a predefined characteristic (e.g., the neural firing rate mentioned hereinabove). The value for each of the frequency bands represents one component of a point in the acoustic space. For 20 frequency bands, the acoustic space has n = 20 dimensions and each point has 20 components.

During a training period in which known sounds are uttered, the characteristic(s) for each frequency band is measured or computed at successive time intervals. Based on the points generated during the training period, in response to known speech inputs, acoustic space is divided into regions. Each region is represented by a prototype vector. In the present discussion, a prototype vector is preferably defined as a fully specified probability distribution over the n-dimensional space of possible acoustic vectors.

A clustering operator 214 (e.g., an IBM 3081 processor) determines how the regions are to be defined, based on the training data. The prototype vectors which represent the regions, or clusters, are stored in a memory 216. The memory 216 stores the components of each prototype vector and, preferably, stores a label (or feneme) which uniquely identifies the prototype vector. Preferably, the clustering operator 214

divides the acoustic space into 200 clusters, so that there are 200 prototype vectors which are defined based on the training data. Clustering and storing respective prototypes for the clusters are discussed in prior technology.

During the training period, the FFT/Filter Bank Stage 212 provides data used in clustering and forming prototypes. After the training period, the FFT/Filter Bank Stage 212 provides its output to an adaptive labeller 218 (which preferably comprises an IBM 3081 processor). After the training period and the prototypes are defined and stored, unknown speech inputs (i.e., an unknown acoustic waveform) are uttered into the microphone 202 for processing. The FFT/Filter Bank Stage 212 produces an output for each successive time interval (i = 1,2,3,...), the output having a value for each of the n = 20 frequency bands. The 20 values, taken together, represent a feature vector. The feature vectors enter the adaptive labeller 218 as a string of input feature vectors.

The other input to the adaptive labeller 218 is from the prototype memory 216. The adaptive labeller 218, in response to an input feature vector, provides as output: (1) a normalized output vector and (2) a label corresponding to the prototype vector associated with a normalized output vector. At each successive time interval, a respective normalized output vector and a corresponding label (or feneme) is output from the adaptive labeller 218.

Fig. 6 is a diagram illustrating a specific embodiment of an adaptive labeller 300 (see labeller 218 of Fig. 5). The input feature vectors $\bar{x}_i$ are shown entering a counter 302. The counter 302 increments with each time interval starting with i = 0. At i = 0, initial parameters are provided by memory 304 through switch 306 to a parameter storage memory 308. The input feature vector $\bar{x}_0$ enters an FIR filter 310 together with the stored parameter values. The FIR filter 310 applies the operator function $A_0$ to the input feature vector $\bar{x}_0$ as discussed hereinabove. (A preferred operator function is outlined in the description hereinbelow.)

The normalized output vector $\bar{y}_0$ from the FIR filter 310 serves as an output of the adaptive labeller 300 and also as an input to distance calculator 312 of the labeller 300. The distance calculator 312 is also connected to the prototype memory (see Fig. 5). The distance calculator 312 computes the distance between each prototype vector and the normalized output vector $\bar{y}_0$. A minimum selector 314 associates the "closest" prototype vector with the normalized output vector $\bar{y}_0$. The closest prototype --as identified by a respective label-- is output from the minimum selector 314 as the other output of the labeller 300.

The minimum selector 314 also supplies the output therefrom to a derivative calculator 316. The derivative calculator 316 determines the rate of change of the distance calculator equation with respect to parameters included in the operator function. By hill-climbing, the respective values for each parameter which tend to minimize the distance (and hence maximize the closeness of the normalized output vector $\bar{y}_0$ and the prototype associated therewith) are computed. The resultant values, which are referred to as up-dated parameter values, are generated by a first-order FIR filter 318, the output from which is directed to switch 306. At the next time interval, i > 0. The up-dated parameter values enter the memory 308. With the entry of the input feature vector $\bar{x}_1$, the up-dated parameter values from memory 308 are incorporated into the operator function implemented by the FIR filter 310 to generate a normalized output vector $\bar{y}_1$. $\bar{y}_1$ exits the labeller 300 as the output vector following $\bar{y}_0$ and also enters the distance calculator 312. An associated prototype is selected by the minimum selector 314; the label therefor is provided as the next prototype output from the labeller 300. The parameters are again up-dated by means of the derivative calculator 316 and the filter 318.

Referring to Fig. 7, a specific embodiment of the distance calculator 312 is shown to include an adder 400 for subtracting the value of one frequency band of a given prototype vector from the normalized value of the same band of the output vector. In similar fashion, a difference value is determined for each band. Each resulting difference is supplied to a squarer element 402. The output of the squarer element 402 enters an accumulator 404. The accumulator 404 sums the difference values for all bands. The output from the accumulator 404 enters the minimum selector 314.

Fig. 8 shows a specific minimum selector formed of a comparator 410 which compares the current minimum distance against the current computed distance for a prototype vector $P_k$. If $d_j < d_k$, $j = k$; otherwise j retains its value. After all distance computations are processed by the comparator 410, the last value for j represents the (label) prototype output.

Fig. 9 shows a specific embodiment for the derivative calculator which includes an adder 420 followed by a multiplier 422. The adder 420 subtracts the associated prototype from the normalized output vector; the difference is multiplied in the multiplier 422 by another value (described in further detail with regard to Fig.11).

Fig. 10 is a general flow diagram of a process 500 performed by the adaptive labeller 300. Normalization parameters are initialized in step 502. Input speech is converted into input feature vectors in step 504. The input feature vectors $\bar{x}_i$ are transformed in step 506 into normalized vectors $\bar{y}_i$ which replace

the input feature vectors in subsequent speech processing. The normalized vectors provide one output of the process 500. The closest prototype for each normalized vector is found in step 508 and the label therefor is provided as a second output of the process 500. In step 510, a calculation is made to determine the closest distance derivative with respect to each normalization parameter. In step 512, the normalization parameters are up-dated and incorporated into the operator function $A_i$.

Fig. 11 further specifies the steps of Fig. 10. For the first time interval i = 0, parameters A(k,ℓ)) and B(ℓ) of function $A_i$ are given initial values in initialization step 602. The time interval is incremented in step 603 and values for parameters A(k,ℓ) and B(ℓ) are stored as $a_i(k,\ell)$ and b(ℓ), respectively, in step 604. The input feature vector corresponding to the current time interval i enters normalization step 606. The normalization step 606, in the Fig. 11 embodiment, involves a linear operator $A_i$ function of the form Ax + B where A and B are parameter representations and x is a set of one or more recent input feature vectors occurring at or before time interval i. In Fig. 11, each component of the vector is affected by a set of A parameter values and one corresponding B value. In performing the transformation

$$\bar{y}_i = A_i(x)$$

based on the A(k,ℓ) and B (ℓ) parameters, the index ℓ in Fig. 11 corresponds to a vector component. The index k identifies the kth recent vector $\bar{x}_{i-k}$. That is, if k = 0, the current vector is identified; if k = 1, the most recent previous vector is identified; and so on. The expression A(k,ℓ) thus corresponds to the ℓth component of the kth vector. The operator function is completely defined by the (K + 1)(N + 1) parameters --see steps 606 and 608-- of the form a(k,ℓ) and b(ℓ).

The result of step 606 is a normalized output vector $\bar{y}_i$ which is more informative than the input feature vector $\bar{x}_i$ corresponding thereto.

In step 607, prototype vectors $\bar{P}_j$ are supplied from storage to provide input to a distance calculation step 608. In step 608, the difference between the ℓth component of the normalized vector and the ℓth component of the jth prototype vector is determined for each of the N components; the squares of the differences being added to provide a distance measure for the jth prototype vector. Step 608 is repeated for each prototype vector $\bar{P}_j$(j = 1, ..., m). In step 609, the prototype vector having the smallest computed distance is selected as the prototype associated with the normalized output vector. The prototype vector in the form of (a) its components or (b) a label (or feneme) identifying the prototype vector is provided as an output $j_i$.

In step 610, derivatives (or more precisely gradients) are calculated for the distance equation in step 608 with respect to each parameter $a_i(k,\ell)$ and $b_i(\ell)$ for the closest prototype. An up-dated value for each parameter is then computed as:

$$A(k,\ell) = a_i(k,\ell) - c_1 \nabla_{a_i}(k,\ell)$$

for one parameter or

$$B(\ell) = b_i(\ell) - c_2 \nabla_{b_i}(\ell)$$

for the other parameter. The ∇ operator corresponds to the derivative (i.e., gradient) function of step 610. The $c_1$ and $c_2$ values are constants which are preferably determined during the training period and are preferably fixed. Alternatively, however, the c values may be tailored to a particular speaker as desired. Moreover, if the well-known Hessian approach is used in the "hill-climbing" to provide a maximum closeness (or minimum distance value) with respect to each parameter, the c values are readily modified.

A series of experiments were conducted using loud and soft voices as well as environments in which the microphone-speaker distance was varied to produce gain variations. Employing standard labelling in four such experiments resulted in decoding error rates of 9%, 25%, 20%, and 18%, respectively. By applying the adaptive labelling approach of the present invention under the same four experimental conditions, error rates of 4%, 1.5%, 7%, and 3% were achieved. An average improvement of 80% in error

rate and a reduction in decoding time by an average of 30% resulted from use of the present invention.

While the invention has been described with reference to a preferred embodiment thereof, it will be understood by those skilled in the art that various changes in form and details may be made without departing from the scope of the invention.

For example, the described embodiment is deterministic in nature. That is, a point (or vector) is transformed to another point (or vector) through adaptive normalization. The invention, however, also contemplates a probabilistic embodiment in which each prototype --rather than identifying a vector-- corresponds to a probabilistic finite state machine PFSM (or Markov model). In the probabilistic embodiment, the closeness measure is based on the average likelihood over all states in the PFSM or, alternatively, is the likelihood of the final state probability. At time interval $i = 0$, each PFSM is initialized. With each frame, the likelihoods at each state in each PFSM are up-dated. The sum of closeness measures for all PFSMs serves as the objective function. This sum is used in place of the distance measure employed in the deterministic embodiment.

In addition, the components of the feature vectors (and prototype vectors) may alternatively correspond to well-known (1) Cepstral coefficients, (2) linear predictive coding coefficients, or (3) frequency band-related characteristics.

Also, the present invention contemplates an operator function in which not only the parameters are up-dated but the form of the operator function is also adapted. By way of example, there may be a collection of operator expressions --one for each prototype. The effect of each operator expression may be weighted based on the distance computed for the prototype corresponding thereto. The composite of the combined weighted operator expressions then represents the operator function.

It is further noted that "closeness" preferably refers to the prototype of the defined set which is most probable according to the conditional probability $p(i|x)$ in a mixture model for the distribution $f(x)$ of the feature vector

$$f(x) = \sum_{j=1}^{k} p_j f_j(x) .$$

Thus $p(j|x) = p_j f_j / f(x)$ where $P_j$ is the marginal prototype of the jth prototype. The distributions (or prototypes) $f_j(x)$ are conditional probability densities for x given the label j. In the case of equally likely Gaussian densities with a common scale, the most probable prototype is simply the one with a mean vector $\mu_j$ which is closest to x in the sense of Euclidean distance:

$$d(x,\mu_j) = \sum_{v=1}^{m} [x(v) - \mu_j(v)]^2 .$$

However, other definitions of "closeness" (which may be found in the prior technology) may also be employed.

## Claims

**1.** A speech processing method in which acoustic space is partitioned into clusters with each cluster having a representative prototype vector stored therefor and in which an interval of speech is represented by a feature vector $X_i$ in the space, where i corresponds to a respective interval of speech, comprising transforming $X_i$ into a vector $Y_i$ closer to the prototype vectors, characterised by

(a) said transforming being defined by $Y_i = A_i(x)$ where $A_i$ is an operator function specified in terms of a number of parameters wherein each parameter has a stored value subject to updating at successive time intervals and where x designates a number of feature vectors, at or before time interval i; and by

(b) selecting the prototype vector closest to the transformed vector $Y_i$: by means of a distance measure;

(c) altering the operator function in a manner which reduces the distance between the transformed vector $Y_i$ and the closest prototype selected therefor ; and

(d) applying the altered operator function at the next time interval in order to yield a transformed vector for said next feature record.

**2.** The method of Claim 1 characterised by the further step of:
(e) repeating steps (a) through (d) for successive time intervals.

**3.** The method of Claim 2 characterised by the further steps of:
(f) providing the transformed vectors at successive time intervals as an output string which is input to the back end of a speech processor.

**4.** The method of Claim 2 characterised by the further steps of:
(g) providing the selected prototype vectors at successive time intervals as an output string which is input to the back end of a speech processor.

**5.** The method of Claim 2 characterised in that the step of transforming the feature vector includes the steps of:
(h) applying a linear operator function to the feature vector.

**6.** The method of Claim 5 characterised in that step (h) includes the step of:
(j) computing each component of the transformed vector according to the expression:

$$Y_i(\ell) = \sum_{k=0}^{K} a_i(k,\ell) X_{i-k}(\ell) + b_i(\ell)$$

wherein the index l identifies the component of the transformed vector the value of which is being computed and the index k identifies the kth recent input feature vector.

**7.** The method of Claim 6 characterised in that step (j) includes the steps of:
(k) computing a distance measure of closeness between $y_i$ and each prototype vector $P_j$ as:

$$d_i(j) = \sum_{\ell=1}^{N} [ Y_i(\ell) - P_j(\ell) ]^2 ;$$

(l) determining a respective rate of change relationship for the distance measure relative to each parameter;
(m) for each respective rate of change relationship, computing the parameter value which yields the minimum distance; and
(n) up-dating the operator function with the parameter value computed in step (m).

**8.** A speech processing apparatus in which acoustic space is partitioned into clusters with each cluster having a representative prototype vector stored therefor and in which an interval of speech is represented by a feature vector $X_i$ in the space, where i corresponds to a respective interval of speech, comprising
(a) First filter means (310) for transforming $X_i$ into a vector $Y_i$ closer to the prototype vectors, defined by $Y_i = A_i(x)$ where $A_i$ is an operator function specified in terms of a number of parameters wherein each parameter has a stored value subject to updating at successive time intervals and where x designates a number of feature vectors, at or before time interval i;
(b) calculator means (312, 314) for selecting the prototype vector closest to the transformed vector $Y_i$ by means of a distance measure;
(c) second filter means (318) for altering the operator function in a manner which reduces the distance between the transformed vector $Y_i$ and the closest prototype selected therefor ; and
(d) means (302, 306) for applying the altered operator function at the next time interval in order to yield a transformed vector for said next future record.

**9.** Apparatus as in Claim 8 further characterised by:

(e) means for outputting successive transformed vectors which are generated by said first filter means.

**10.** Apparatus as in Claim 9 further characterised by:
(f) means for outputting, for each successive transformed vector, the closest prototype thereto, in order to provide a string of prototypes as output.

**11.** Apparatus as in Claim 8 further characterised by:
(g) means for outputting, for each successive transformed vector, the closest prototype thereto, to provide a string of prototypes as output.

**12.** Apparatus as in Claim 8 characterised in that said calculator means includes:
(h) distance calculator means for determining the respective distance between a transformed vector and each prototype vector according to a distance measure relationship in terms of operator function parameters;
(j) minimum selector means, which receives as input distance calculations from said distance calculator means, for selecting the prototype which is closest to a transformed vector; and
(k) derivative calculator means for deriving the respective gradient of the distance measure relationship relative to each operator function parameter.

**13.** A speech processing method in which speech is represented by a fixed set of prototypes stored in an acoustic processor, wherein each prototype corresponds to the set of n probability distributions of a Markov model defined during a training period, comprising
(a) generating one feature element $x_i$ after another at successive time intervals i by an acoustic processor, wherein each feature element corresponds to a set of n probability distributions generated in response to an unknown speech input uttered ouside the training period, comprising transforming $x_i$ into a vector $y_i$ closer to the prototypes,
(b) applying an operator function $A_i$ to the feature element $x_i$ to yield the transformed output $y_i$, wherein the operator function is specified in terms of a number of parameters whose stored values are subject to updating at successive time intervals;
(c) computing the closeness of the transformed output $y_i$ to each prototype $P_j$ based on a prescribed closeness relationship;
(d) computing the rate of change of the closeness relationship relative to each of at least some operator function parameters;
(e) up-dating the current value of each parameter in the operator function to a value which increases the closeness between the transformed output yi and the closest prototype thereto;and
(f) applying the operator function with up-dated current values to a next feature vector where i is incremented by 1 in order to yield a transformed output therefor.

**14.** The method of claim 13 characterized by the further step of:
(g) repeating steps (b) through (f) for successive feature vectors at successive time intervals.

**Patentansprüche**

**1.** Verfahren zur Sprachverarbeitung, bei dem ein akustischer Raum in Cluster unterteilt wird, wobei jedem Cluster ein entsprechender Prototypvektor zugeordnet wird, und bei dem ein Sprachintervall durch einen Merkmalvektor $X_i$ im Raum dargestellt wird, wobei i einem entsprechenden Sprachintervall entspricht, und bei dem $X_i$ in einen Vektor $Y_i$ näher an den Prototypvektoren transformiert wird, welches dadurch gekennzeichnet ist, daß
(a) die Transformation durch $Y_i = A_i(x)$ definiert ist, wobei $A_i$ eine durch eine Anzahl von Parametern spezifizierte Operatorfunktion darstellt, in der jedem Parameter ein gespeicherter Wert zugeordnet wird, der zu aufeinanderfolgenden Zeitintervallen aktualisiert werden kann, und in der x eine Merkmalvektorfolge zu oder vor dem Zeitintervall i bezeichnet; und daß
(b) der am transformierten Vektor $Y_i$ nächstgelegene Prototypvektor durch ein Abstandsmaß ausgewählt wird;
(c) die Operatorfunktion so verändert wird, daß der Abstand zwischen dem transformierten Vektor $Y_i$ und dem dafür ausgewählten nächstgelegenenen Prototypvektor reduziert wird; und
(d) die veränderte Operatorfunktion zum nächsten Zeitintervall angewendet wird, um einen transformierten Vektor für die nächste Merkmalvektorfolge zu erzeugen.

**2.** Verfahren nach Anspruch 1, durch den weiteren Schritt gekennzeichnet, daß
(e) Schritte (a) bis (d) über aufeinanderfolgende Zeitintervalle wiederholt werden.

**3.** Verfahren nach Anspruch 2, durch die weiteren Schritte gekennzeichnet, daß
(f) die transformierten Vektoren zu aufeinanderfolgenden Zeitintervallen als eine Ausgabefolge erstellt werden, die in die Nachverarbeitungsstufe eines Sprachprozessors eingegeben wird.

**4.** Verfahren nach Anspruch 2, durch die weiteren Schritte gekennzeichnet, daß
(g) die ausgewählten Prototypvektoren zu aufeinanderfolgenden Zeitintervallen als eine Ausgabefolge erstellt werden, die in die Nachverarbeitungsstufe eines Sprachprozessors eingegeben wird.

**5.** Verfahren nach Anspruch 2, dadurch gekennzeichnet, daß der Schritt, in dem der Merkmalvektor transformiert wird, folgende Schritte umfaßt:
(h) Anwendung einer linearen Operatorfunktion auf den Merkmalvektor.

**6.** Verfahren nach Anspruch 5, dadurch gekennzeichnet, daß Schritt (h) den folgenden Schritt umfaßt:
(j) Berechnung jeder Komponente des transformierten Vektors gemäß dem Ausdruck:

$$Y_i(\ell) = \sum_{k=0}^{K} a_i(k,\ell) X_{i-k}(\ell) + b_i(\ell)$$

wobei der Index $\ell$ die Komponente des transformierten Vektors bezeichnet, deren Wert gerade berechnet wird, und der Index k den k-ten zuletzt verarbeiteten Merkmalvektor bezeichnet.

**7.** Verfahren nach Anspruch 6, dadurch gekennzeichnet, daß Schritt (j) folgende Schritte umfaßt:
(k) Berechnung eines der Nähe entsprechenden Abstandsmaßes zwischen $Y_i$ und jedem Prototypvektor $P_j$ wie folgt:

$$d_i(j) = \sum_{\ell=1}^{N} (Y_i(\ell) - P_j(\ell))^2 ;$$

(l) Ermittlung eines entsprechenden Steigungsverhältnisses für das Abstandsmaß in bezug auf jeden Parameter; und
(m) Berechnung, für jedes Steigungsverhältnis, des Parameterwertes, der den kleinsten Abstand liefert;
(n) Aktualisierung der Operatorfunktion mit dem im Schritt (m) berechneten Wert.

**8.** Sprachverarbeitungssystem, bei dem ein akustischer Raum in Cluster unterteilt wird, wobei jeder Cluster ein entsprechender Prototypvektor zugeordnet wird, und bei dem ein Sprachintervall durch einen Merkmalvektor $X_i$ im Raum dargestellt wird, wobei i einem Sprachintervall entspricht, welches folgendes umfaßt:
(a) ein erstes Filtermittel (310) zur Transformation von $X_i$ in einen Vektor $Y_i$ näher an den Prototypvektoren, durch $Y_i = A_i(x)$ definiert, wobei $A_i$ eine durch eine Anzahl von Parametern spezifizierte Operatorfunktion ist, wobei jeder Parameter über einen gespeicherten Wert verfügt, der zu aufeinanderfolgenden Zeitintervallen aktualisiert werden kann, und wobei x eine Merkmalvektorfolge zum oder vor dem Zeitintervall i bezeichnet;
(b) Rechenmittel (312, 314) zum Auswählen durch ein Abstandsmaß des am transformierten Vektor $Y_i$ nächstgelegenen Prototypvektors;
(c) ein zweites Filtermittel (318) zur Veränderung der Operatorfunktion so, daß der Abstand zwischen dem transformierten Vektor $Y_i$ und dem dafür ausgewählten nächstgelegenen Prototypvektor reduziert wird;

(d) Mittel (302, 306) zur Anwendung der veränderten Operatorfunktion zum nächsten Zeitintervall, um einen transformierten Vektor für die nächste Merkmalvektorfolge zu liefern.

**9.** System nach Anspruch 8, weiter gekennzeichnet durch
(e) Mittel zur Ausgabe aufeinanderfolgender transformierter Vektoren, die durch das erste Filtermittel erzeugt werden.

**10.** System nach Anspruch 9, weiter gekennzeichnet durch
(f) Mittel zur Ausgabe, für jeden aufeinanderfolgenden transformierten Vektor, des nächstgelegenen Prototypvektors, um eine Prototypvektorfolge zu liefern.

**11.** System nach Anspruch 8, weiter gekennzeichnet durch
(g) Mittel zur Ausgabe, für jeden aufeinanderfolgenden transformierten Vektor, des nächstgelegenen Prototypvektors, um eine Prototypvektorfolge zu liefern.

**12.** System nach Anspruch 8, dadurch gekennzeichnet, daß die Rechenmittel folgendes umfassen:
(h) Abstandsrechenmittel zur Berechnung des entsprechenden Abstandes zwischen einem transformierten Vektor und jedem Prototypvektor gemäß einem durch Operatorfunktionsparameter definierten Abstandsmaßverhältnis;
(j) Niedrigstwertselektormittel, die als Eingabe Abstandsberechnungen von den Abstandsrechenmitteln zur Auswahl des an einem transformierten Vektor nächstgelegenenen Prototypvektors erhalten; und
(k) Ableitungsrechenmittel zur Ermittlung der entsprechenden Steigung des Abstandsmaßverhältnisses in bezug auf jeden Operatorfunktionsparameter.

**13.** Verfahren zur Sprachverarbeitung, bei dem die Sprache durch eine feste Menge in einem akustischen Prozessor gespeicherter Prototypen dargestellt wird, wobei jeder Prototyp der Menge von n während einer Lernphase defininierten Wahrscheinlichkeits-verteilungen eines Markovschen Modells entspricht, welches folgendes umfaßt:
(a) Erzeugung eines Merkmalelements $X_i$ nach dem anderen zu aufeinanderfolgenden Zeitintervallen durch einen akustischen Prozessor, wobei jedes Merkmalelement einer Menge von n Wahrscheinlichkeitsverteilungen entspricht, die auf der Basis einer unbekannten, außerhalb der Lernphase gesprochenen Spracheingabe ermittelt wurden, und wobei $X_i$ in einen näher an den Prototypen gelegenen Vektor $Y_i$ transformiert wird;
(b) Anwendung einer Operatorfunktion $A_i$ auf das Merkmalelement $X_i$, um die transformierte Ausgabe $Y_i$ zu liefern, wobei die Operatorfunktion durch eine Anzahl von Parametern spezifiziert ist, deren gespeicherten Werte zu aufeinanderfolgenden Zeitintervallen aktualisierbar sind;
(c) Berechnung der Nähe der transformierten Ausgabe $Y_i$ an jedem Prototyp $P_j$ auf der Basis eines vorgeschriebenen Näheverhältnisses;
(d) Berechnung der Steigung des Näheverhältnisses in bezug auf jeden Parameter aus einer Anzahl von Operatorfunktionsparametern;
(e) Aktualisierung des Werts jedes Parameters in der Operatorfunktion mit einem Wert, der die transformierte Ausgabe $Y_i$ näher an den nächstgelegenen Prototyp führt; und
(f) Anwendung der Operatorfunktion mit aktualisierten Werten auf einen nächsten Merkmalvektor, wobei i um Eins erhöht wird, um dafür eine transformierte Ausgabe zu liefern.

**14.** Verfahren nach Anspruch 13, durch den weiteren Schritt gekennzeichnet, daß
(g) Schritte (b) bis (f) für aufeinanderfolgende Merkmalvektoren zu aufeinanderfolgenden Zeitintervallen wiederholt werden.

## Revendications

**1.** Procédé de traitement de la parole dans lequel l'espace acoustique est subdivisé en groupes, un vecteur prototype représentatif étant stocké pour chaque groupe, et dans lequel un intervalle de parole est représenté par un vecteur de particularités ou d'entité $\overline{x}_i$ dans l'espace, i correspondant à un intervalle de parole respectif, comprenant la transformation de $\overline{x}_i$ en un vecteur $\overline{y}_i$ plus proche des vecteurs prototypes, caractérisé en ce que
(a) ladite transformation est définie par $y_i = A_i(x)$ où $A_i$ est une fonction opérateur spécifiée en

termes d'une pluralité de paramètres, chaque paramètre ayant une valeur stockée qui est mise à jour à des intervalles de temps successifs, et où x désigne un nombre de vecteurs d'entité, à l'intervalle de temps i ou avant cet intervalle ; et en ce que
(b) on choisit le vecteur prototype le plus proche du vecteur transformé $y_i$, au moyen d'une mesure de distance ;
(c) on modifie la fonction opérateur d'une manière qui réduit la distance entre le vecteur transformé $y_i$ et le prototype le plus proche choisi pour ce dernier; et
(d) on applique la fonction opérateur modifiée à l'intervalle de temps suivant, afin de produire un vecteur transformé pour ledit vecteur d'entité suivant.

**2.** Procédé suivant la revendication 1, caractérisé par l'étape supplémentaire de :
(e) répétition des étapes (a) à (d) pour des intervalles de temps successifs.

**3.** Procédé suivant la revendication 2, caractérisé par les étapes supplémentaires de :
(f) fourniture des vecteurs transformés, à des intervalles de temps successifs,sous la forme d'une chaîne de sortie qui est entrée à l'extrémité dorsale d'un processeur de parole.

**4.** Procédé suivant la revendication 2, caractérisé par les étapes supplémentaires de :
(g) fourniture des vecteurs prototypes choisis, à des intervalles de temps successifs, sous la forme d'une chaîne de sortie qui est entrée à l'extrémité dorsale d'un processeur de parole.

**5.** Procédé suivant la revendication 2, caractérisé en ce que l'étape de transformation du vecteur d'entité comprend les étapes de :
(h) application d'une fonction opérateur linéaire au vecteur d'entité.

**6.** Procédé suivant la revendication 5, caractérisé en ce que l'étape (h) comprend l'opération de :
(j) calcul de chaque composante du vecteur transformé conformément à l'expression :

$$Y_i(\ell) = \sum_{k=0}^{K} a_i(k,\ell)\, X_{i-k}(\ell) + b_i(\ell)$$

dans laquelle l'index $\ell$ identifie la composante du vecteur transformé dont on calcule la valeur, et l'index k identifie le k-ième vecteur d'entité d'entrée récent.

**7.** Procédé suivant la revendication 6, caractérisé en ce que l'étape (j) comprend les étapes de :
(k) calcul d'une mesure de distance de proximité entre $y_i$ et chaque vecteur prototype $P_j$ comme :

$$d_i(j) = \sum_{\ell=1}^{N} [\, Y_i(\ell) - P_j(\ell) \,]^2;$$

($\ell$) détermination d'une relation de vitesse de changement respective pour la mesure de distance relative à chaque paramètre ;
(m) pour chaque relation de vitesse de changement respective, calcul de la valeur de paramètre qui donne la distance minimale ; et
(n) mise à jour de la fonction opérateur avec la valeur de paramètre calculée à l'étape (m).

**8.** Appareil de traitement de la parole dans lequel l'espace acoustique est subdivisé en groupes, un vecteur prototype représentatif étant stocké pour chaque groupe, et dans lequel un intervalle de parole est représenté par un vecteur d'entité $x_i$ dans l'espace, i correspondant à un intervalle de parole respectif, comprenant :
(a) des premiers moyens de filtrage (310) pour transformer $x_i$ en un vecteur $y_i$ plus proche des vecteurs prototypes, défini par $y_i = A_i(x)$ où $A_i$ est une fonction opérateur spécifiée en termes d'une pluralité de paramètres,chaque paramètre ayant une valeur stockée sujette à une mise à jour à des

intervalles de temps successifs, et où x désigne un nombre de vecteurs d'entité, à l'intervalle de temps i ou avant cet intervalle ;

(b) des moyens de calcul (312,314) pour sélectionner le vecteur prototype le plus proche du vecteur transformé $y_i$ au moyen d'une mesure de distance ;

(c) des deuxièmes moyens de filtrage (318) pour modifier la fonction opérateur d'une manière qui réduit la distance entre le vecteur transformé $y_i$ et le prototype le plus proche sélectionné pour ce dernier ; et

(d) des moyens (302,306) pour appliquer la fonction opérateur modifiée, à l'intervalle de temps suivant, afin de produire un vecteur transformé pour ledit vecteur immédiatement suivant.

**9.** Appareil suivant la revendication 8, caractérisé en outre par :

(e) des moyens de sortie de vecteurs transformés successifs qui sont engendrés par lesdits premiers moyens de filtrage.

**10.** Appareil suivant la revendication 9, caractérisé en outre par :

(f) des moyens de fourniture, pour chaque vecteur transformé successif, du prototype le plus proche de ce dernier, afin de fournir une chaîne de prototypes comme sortie.

**11.** Appareil suivant la revendication 8, caractérisé en outre par :

(g) des moyens de fourniture, pour chaque vecteur transformé successif, du prototype le plus proche de ce dernier, pour fournir une chaîne de prototypes comme sortie.

**12.** Appareil suivant la revendication 8, caractérisé en ce que lesdits moyens de calcul comprennent :

(h) des moyens de calcul de distance pour déterminer la distance respective entre un vecteur transformé et chaque vecteur prototype,conformément à une relation de mesure de distance en termes de paramètres de la fonction opérateur ;

(j) des moyens de sélection de minimum, qui reçoivent comme entrée les calculs de distance provenant desdits moyens de calcul de distance, pour sélectionner le prototype qui est le plus proche d'un vecteur transformé ; et

(k) des moyens de calcul de dérivée, pour établir le gradient respectif de la relation de mesure de distance concernant chaque paramètre de la fonction opérateur.

**13.** Procédé de traitement de la parole dans lequel la parole est représentée par un ensemble fixe de prototypes stockés dans un processeur acoustique, chaque prototype correspondant à l'ensemble de n distributions de probabilité d'un modèle de Markov définies pendant une période d'apprentissage, comprenant :

(a) la génération d'un élément d'entité $x_i$ après un autre, à des intervalles de temps successifs i, par un processeur acoustique, de sorte que chaque élément d'entité correspond à un ensemble de n distributions de probabilité engendrées en réponse à une entrée de parole inconnue émise en dehors de la période d'apprentissage, comportant la transformation de $x_i$ en un vecteur $y_i$ plus proche des prototypes,

(b) l'application d'une fonction opérateur $A_i$ à l'élément d'entité $x_i$ pour produire la sortie transformée $y_i$ , la fonction opérateur étant spécifiée en termes d'une pluralité de paramètres dont les valeurs stockées sont soumises à une mise à jour à des intervalles de temps successifs ;

(c) le calcul de la proximité de la sortie transformée $y_i$ à chaque prototype $P_j$ sur la base d'une relation de proximité prescrite ;

(d) le calcul de la vitesse de changement de la relation de proximité par rapport à chacun d'au moins certains paramètres de la fonction opérateur ;

(e) la mise à jour de la valeur en cours de chaque paramètre de la fonction opérateur à une valeur qui augmente la proximité entre la sortie transformée $y_i$ et le prototype le plus proche de cette dernière ; et

(f) l'application de la fonction opérateur,ayant les valeurs courantes mises à jour, à un vecteur d'entité suivant, i étant incrémenté de 1 afin de fournir une sortie transformée pour ce vecteur.

**14.** Procédé suivant la revendication 13, caractérisé par l'étape supplémentaire de :

(g) répétition des étapes (b) à (f) pour les vecteurs d'entité successifs à des intervalles de temps successifs.

FIG. 1

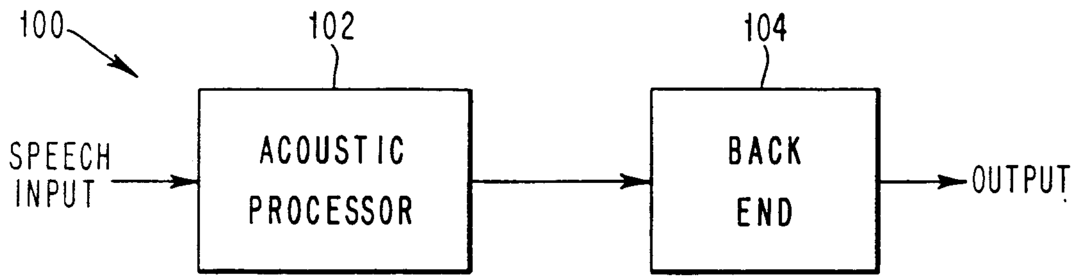
100
102
104
SPEECH INPUT
ACOUSTIC PROCESSOR
BACK END
OUTPUT

FIG. 2

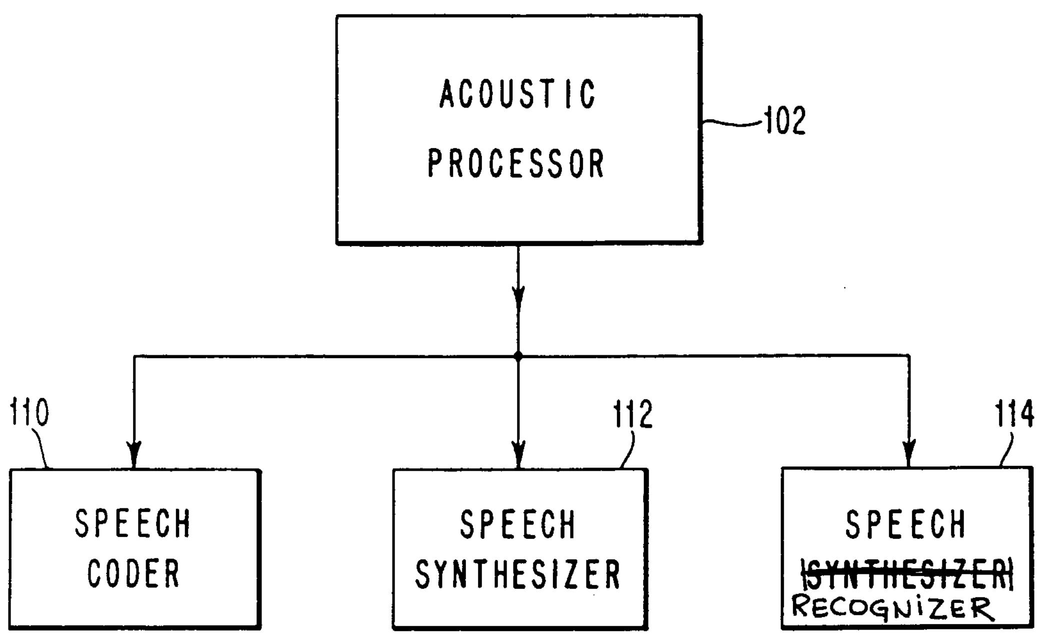
ACOUSTIC PROCESSOR
102
110
112
114
SPEECH CODER
SPEECH SYNTHESIZER
SPEECH ~~SYNTHESIZER~~ RECOGNIZER

FIG. 3 STANDARD NONADAPTIVE LABELLING SYSTEM

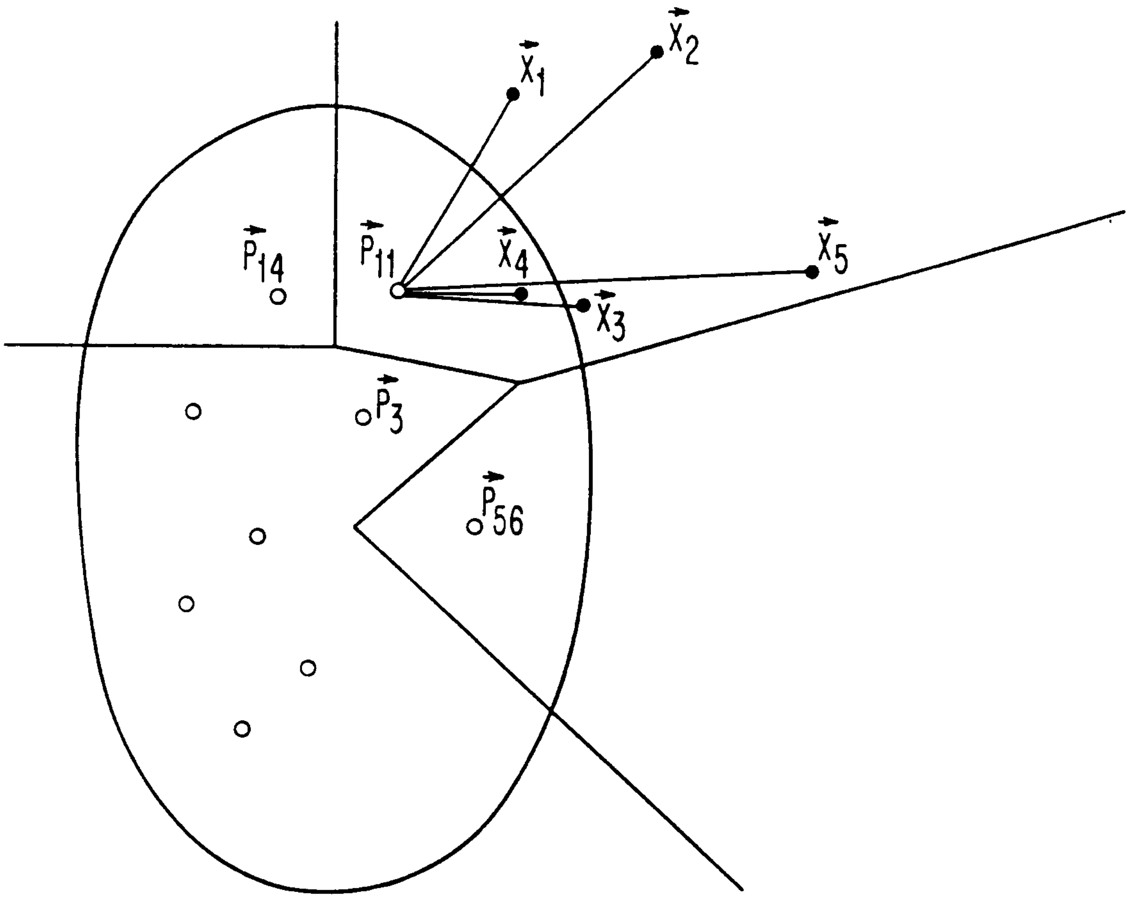


PROTOTYPE SPACE = $\{\vec{P}_1, \vec{P}_2, \ldots, \vec{P}_{200}\}$

INPUT FEATURE VECTORS = $\{\vec{X}_1, \vec{X}_2, \vec{X}_3, \vec{X}_4, \vec{X}_5, \ldots\}$

OUTPUT FEATURE VECTORS = $\{\vec{X}_1, \vec{X}_2, \vec{X}_3, \vec{X}_4, \vec{X}_5, \ldots\}$

FENEME STRING = $\{P_{11}, P_{11}, P_{11}, P_{11}, P_{11}, \ldots, P_{11}\}$

FIG. 4 ADAPTIVE LABELLING SYSTEM

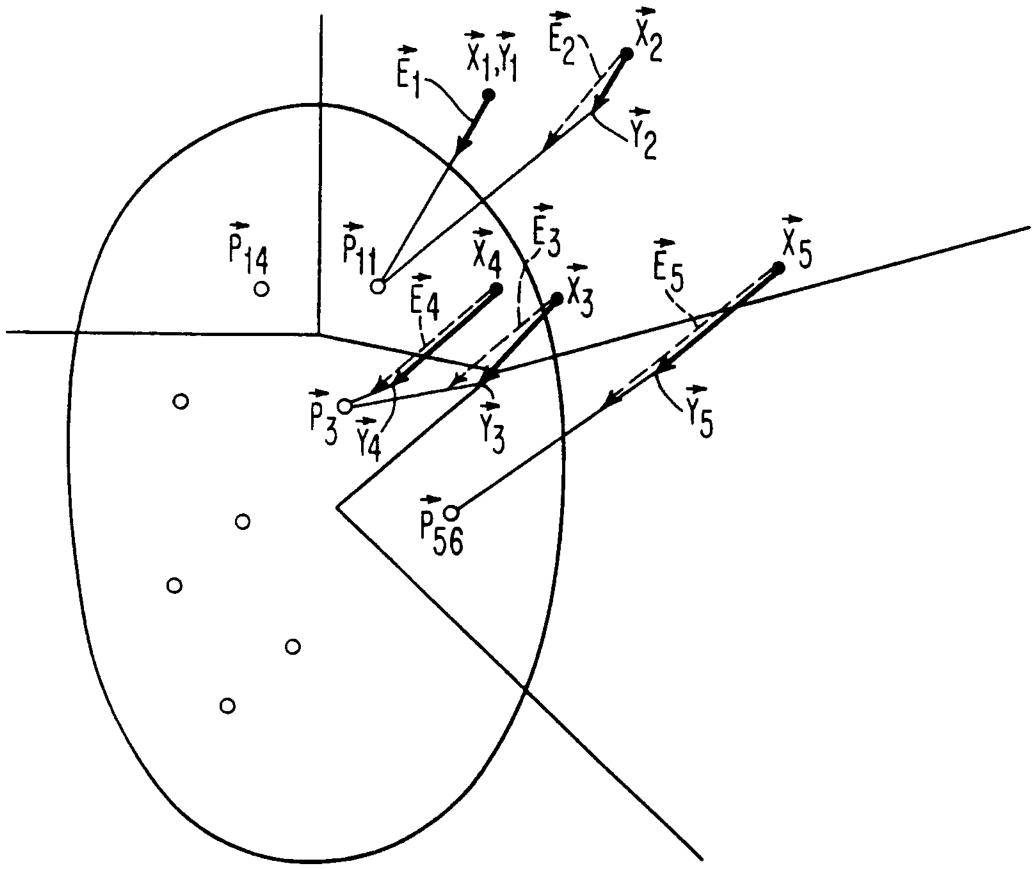


PROTOTYPE SPACE = $\{ \vec{P}_1, \vec{P}_2, \ldots, \vec{P}_{200} \}$

INPUT FEATURE VECTORS = $\{ \vec{X}_1, \vec{X}_2, \vec{X}_3, \vec{X}_4, \vec{X}_5, \ldots \}$

OUTPUT FEATURE VECTORS = $\{ \vec{Y}_1, \vec{Y}_2, \vec{Y}_3, \vec{Y}_4, \vec{Y}_5, \ldots \}$

FENEME STRING = $\{ P_{11}, P_{11}, P_3, P_3, P_{56}, \ldots \}$

FIG. 5

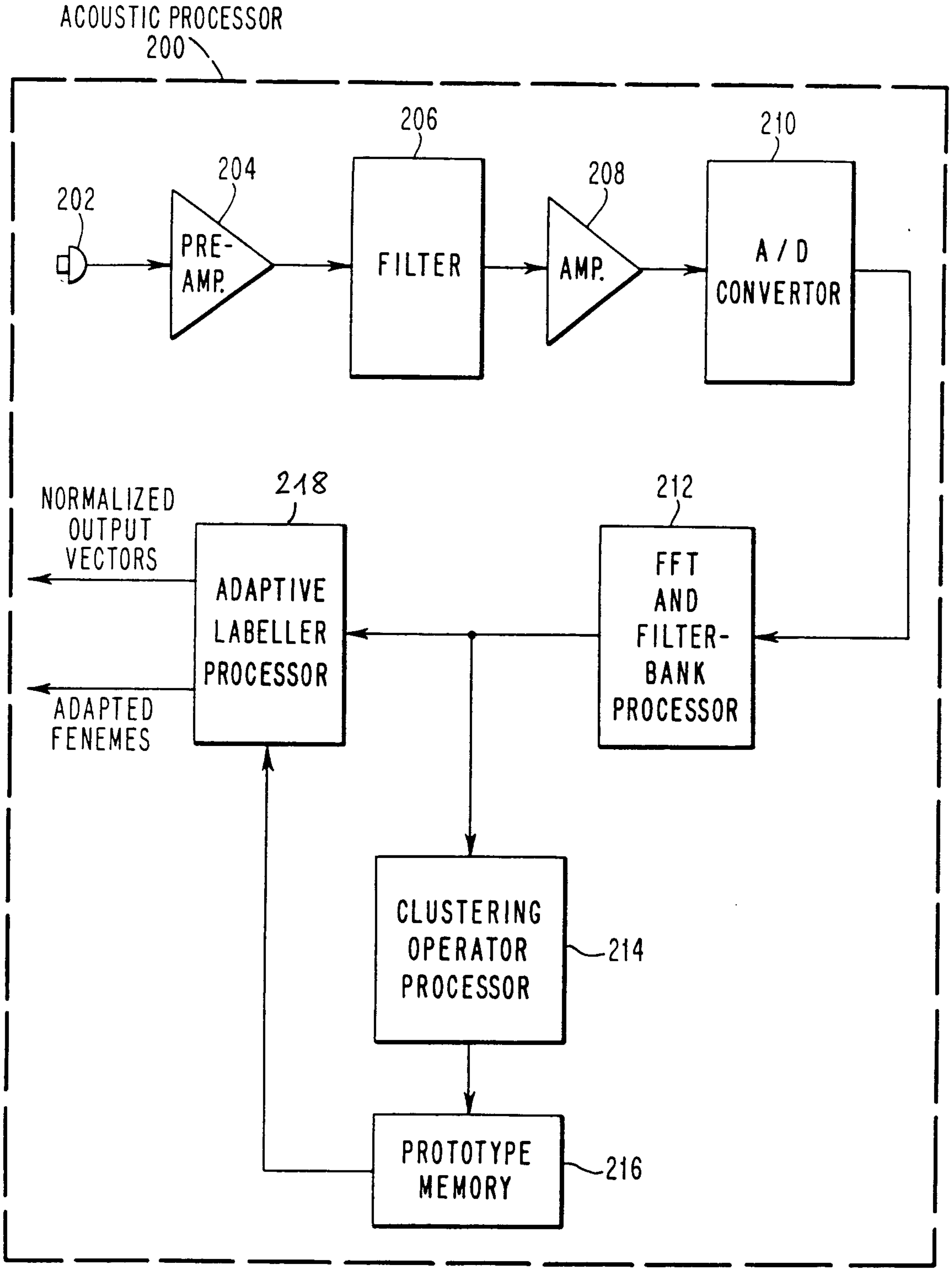
ACOUSTIC PROCESSOR
200
202
204
PRE-AMP.
206
FILTER
208
AMP.
210
A / D CONVERTOR
NORMALIZED OUTPUT VECTORS
218
ADAPTIVE LABELLER PROCESSOR
ADAPTED FENEMES
212
FFT AND FILTER-BANK PROCESSOR
CLUSTERING OPERATOR PROCESSOR
214
PROTOTYPE MEMORY
216

FIG. 6

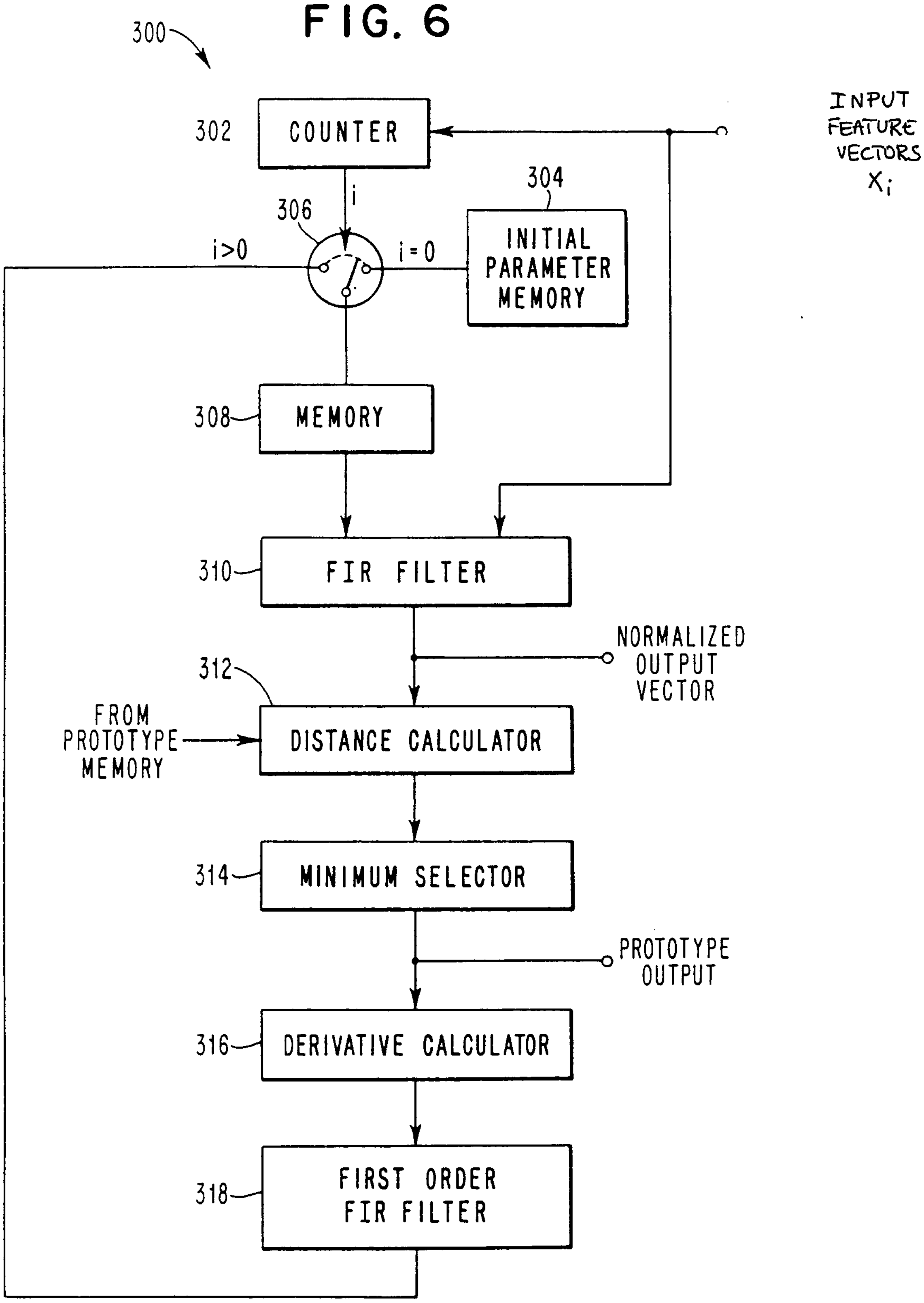
300
302
COUNTER
INPUT FEATURE VECTORS $X_i$
304
INITIAL PARAMETER MEMORY
306
i
i>0
i=0
308
MEMORY
310
FIR FILTER
NORMALIZED OUTPUT VECTOR
312
FROM PROTOTYPE MEMORY
DISTANCE CALCULATOR
314
MINIMUM SELECTOR
PROTOTYPE OUTPUT
316
DERIVATIVE CALCULATOR
318
FIRST ORDER FIR FILTER

FIG. 7

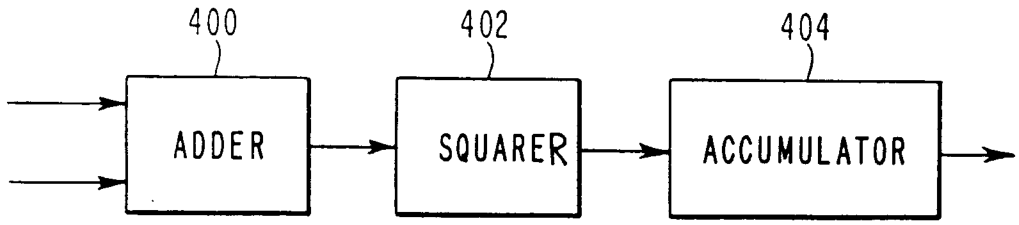


FIG. 8

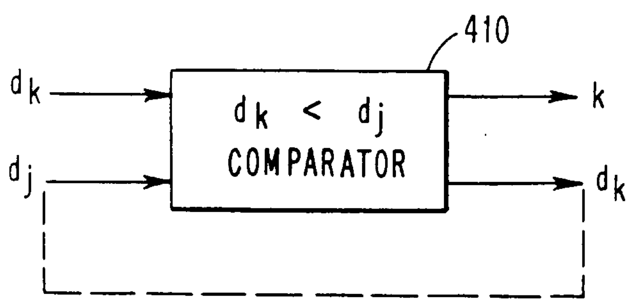


FIG. 9

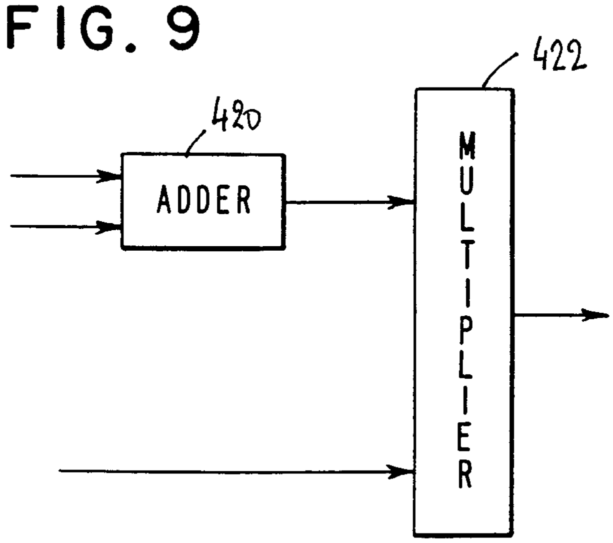

FIG. 10

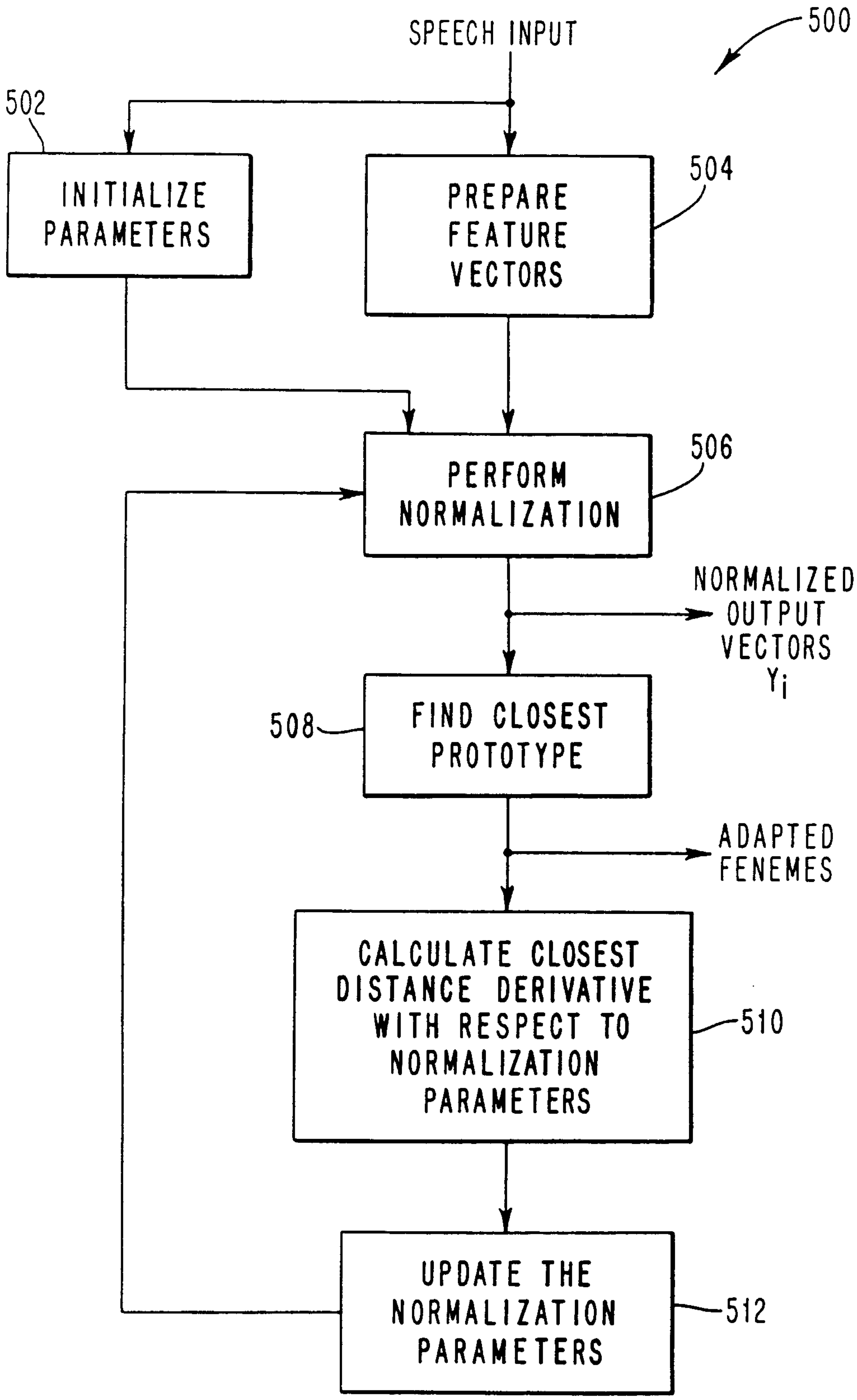
SPEECH INPUT
500
502
INITIALIZE PARAMETERS
PREPARE FEATURE VECTORS
504
PERFORM NORMALIZATION
506
NORMALIZED OUTPUT VECTORS $Y_i$
508
FIND CLOSEST PROTOTYPE
ADAPTED FENEMES
CALCULATE CLOSEST DISTANCE DERIVATIVE WITH RESPECT TO NORMALIZATION PARAMETERS
510
UPDATE THE NORMALIZATION PARAMETERS
512

FIG. 11

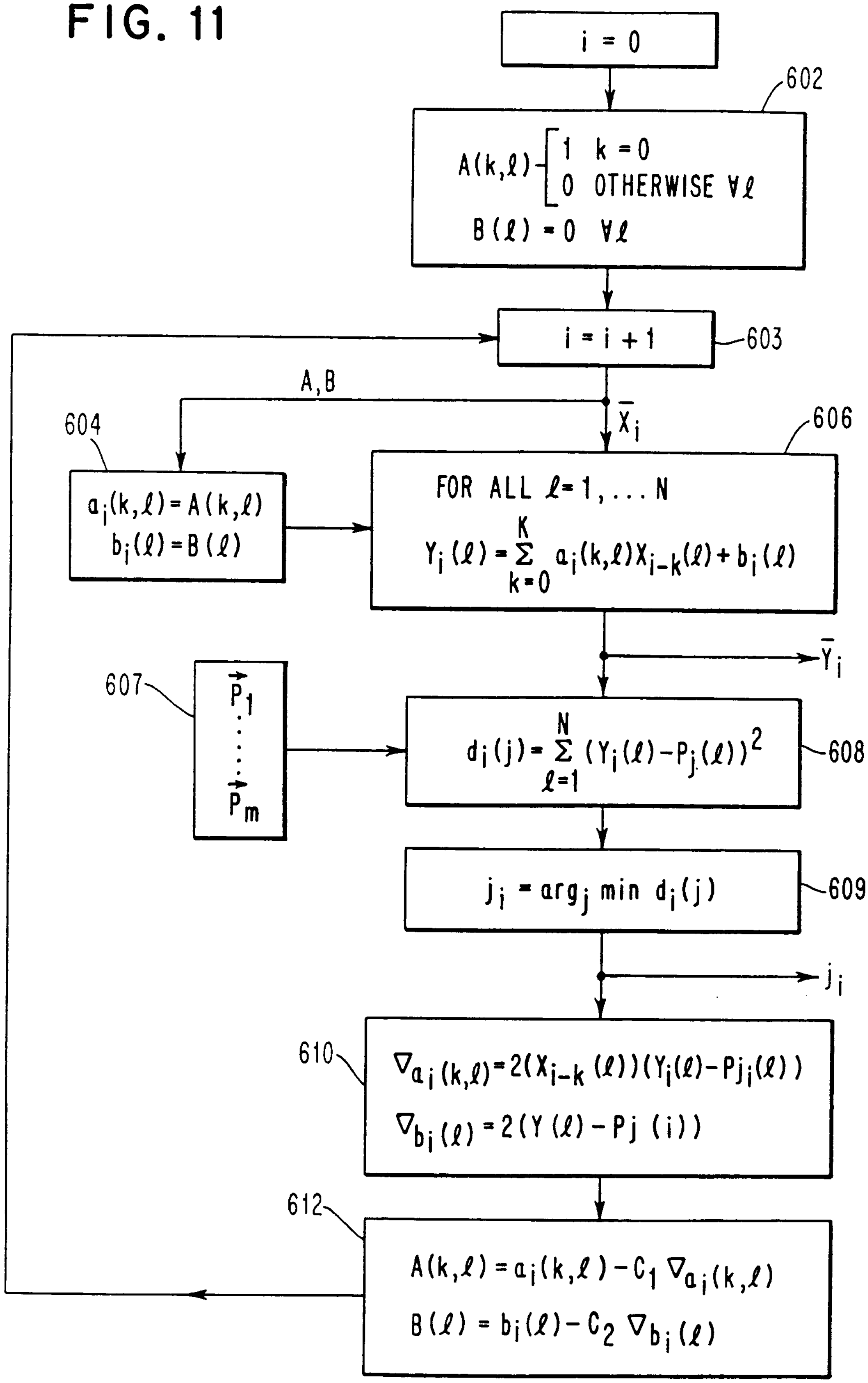
i = 0
602
A(k,ℓ) = 1 k = 0; 0 OTHERWISE ∀ℓ
B(ℓ) = 0 ∀ℓ
i = i + 1
603
A,B
X̄i
604
ai(k,ℓ) = A(k,ℓ)
bi(ℓ) = B(ℓ)
606
FOR ALL ℓ = 1, ... N
Yi(ℓ) = Σ k=0..K ai(k,ℓ)Xi-k(ℓ) + bi(ℓ)
Ȳi
607
P1 ... Pm
di(j) = Σ ℓ=1..N (Yi(ℓ) − Pj(ℓ))²
608
ji = argj min di(j)
609
ji
610
∇ai(k,ℓ) = 2(Xi-k(ℓ))(Yi(ℓ) − Pji(ℓ))
∇bi(ℓ) = 2(Y(ℓ) − Pj(i))
612
A(k,ℓ) = ai(k,ℓ) − C1 ∇ai(k,ℓ)
B(ℓ) = bi(ℓ) − C2 ∇bi(ℓ)